# EUROPÄISCHE PATENTANMELDUNG

(11) **EP 3 492 434 A1**
(43) Veröffentlichungstag der Anmeldung: **05.06.2019**
(21) Anmeldenummer: 18209704.8
(22) Anmeldetag: 03.12.2018
(51) Int. Cl.: C02F 9/00, B01D 61/02, C02F 1/44, C02F 1/28

(54) **AUSTAUSCHBARE WASSERFILTEREINHEIT**

(30) Priorität: 04.12.2017 DE 202017107373 U
(71) Anmelder: InFilly Claim UG, 23568 Lübeck (DE)
(72) Erfinder: JOHANNßen, Sven, 23566 Lübeck (DE)
(74) Vertreter: Patentanwälte Vollmann Hemmer Lindfeld Partnerschaft mbB

(57) **Zusammenfassung**

Die vorliegende Offenbarung betrifft eine austauschbare Wasserfiltereinheit (1) zum Anschluss an eine Haushaltswasserversorgung, mit:
- einem Gehäuse (3),
- einem Wassereinlassanschlussstutzen (5a),
- einem Reinwasserauslassanschlussstutzen (5b),
- einer Pumpe (13),
- mindestens einem ersten Wasserfilter (19),
- einem Druckbehälter (27), und
- einem Leitungssystem (9), das den Wassereinlassanschlussstutzen (5a), die Pumpe (13), das erste Wasserfilter (19), den Druckbehälter (27) und den Reinwasserauslassanschlussstutzen (5b) in einem Wasserkreislauf miteinander verbindet,
wobei die Pumpe (13), das erste Wasserfilter (19), der Druckbehälter (27) und das Leitungssystem (9) in dem Gehäuse installiert sind, und wobei der Wassereinlassanschlussstutzen (5a) und der Reinwasserauslassanschlussstutzen (5b) durch eine Wandung an einer gemeinsamen Seite (7) des Gehäuses (3) führen.

## Beschreibung

Die vorliegende Offenbarung betrifft eine austauschbare Wasserfiltereinheit zum Anschluss an eine Haushaltswasserversorgung oder Zapfstelle in der Küche.

Wasserfiltersysteme unterscheiden sich von Systemen zur Wasserbehandlung dadurch, dass Wasserfiltersysteme im Wesentlichen mit Wasserfiltern arbeiten, die verstopfen können, sich aber nicht verbrauchen, wohingegen Systeme zur Wasserbehandlung meist austauschbare Kartuschen mit lonentauschermittel als Verbrauchsmittel verwenden, die allerdings nicht verstopfen. In der EP 1 253 114 A1, die ein System zur Wasserbehandlung beschreibt, ist dieser Unterschied näher erläutert. Auch die DE 20 2004 008 670 U1 und die EP 2 209 744 B1 beschreiben Systeme zur Wasserbehandlung.

Wasserfiltersysteme können zwar zusätzlich auch lonentauschermittel als Verbrauchsmittel verwenden, haben allerdings immer das Problem, dass ein Wasserfilter über die Dauer der Verwendung verunreinigt und ggf. verstopft. Auch andere Komponenten wie beispielsweise Leitungen, Pumpen, Anschlüsse und Ventile eines Wasserfiltersystems sammeln über die Dauer der Verwendung Verunreinigungen an. Ein aus dem Stand der Technik für Systeme zur Wasserbehandlung bekannter Austausch von Kartuschen mit lonentauschermittel als Verbrauchsmittel löst daher nicht das Problem verunreinigter oder verstopfter Wasserfilter bzw. anderer Komponenten eines Wasserfiltersystems.

Die vorliegende Offenbarung stellt dagegen eine austauschbare Wasserfiltereinheit bereit, die das Problem verunreinigter oder verstopfter Wasserfilter bzw. anderer Komponenten eines Wasserfiltersystems auf einfache Weise löst.

Gemäß der vorliegenden Offenbarung wird eine austauschbare Wasserfiltereinheit zum Anschluss an eine Haushaltswasserversorgung bereitgestellt mit einem Gehäuse, einem Wassereinlassanschlussstutzen, einem Reinwasserauslassanschlussstutzen, einer Pumpe, mindestens einem ersten Wasserfilter, einem Druckbehälter, und einem Leitungssystem, das den Wassereinlassanschlussstutzen, die Pumpe, das erste Wasserfilter, den Druckbehälter und den Reinwasserauslassanschlussstutzen in einem Wasserkreislauf miteinander verbindet. Dabei sind die Pumpe, das erste Wasserfilter, der Druckbehälter und das Leitungssystem in dem Gehäuse installiert und der Wassereinlassanschlussstutzen sowie der Reinwasserauslassanschlussstutzen führen durch eine Wandung an einer gemeinsamen Seite des Gehäuses.

Die hierin offenbarte Wasserfiltereinheit ist also als Gesamtsystem austauschbar, wenn das Wasserfilter und/oder eine der anderen Komponenten verunreinigt oder verstopft sind. Ein Austausch kann beispielsweise in regelmäßigen festgelegten Intervallen und/oder nach einer festgelegten Wasserdurchlaufmenge und/oder einer festgelegten Betriebsdauer stattfinden. Die Anordnung der Anschlussstutzen an einer gemeinsamen Seite des Gehäuses erlaubt es, die entsprechenden Anschlüsse schnell und bequem für den Austausch abzukoppeln, wenn die Wasserfiltereinheit beispielsweise als Einschubmodul für Küchenunterbauschränke ausgebildet ist und alle anderen Seiten des eingeschobenen Gehäuses nicht zugänglich sind.

Optional kann das Gehäuse polyedrisch, vorzugsweise im Wesentlichen quaderförmig, ausgestaltet sein. Dadurch kann es passgenau als Einschubmodul für Küchenunterbauschränke ausgebildet sein und mit seiner Oberseite eine ebene Stellfläche für andere, vorzugsweise leichte, Küchengeräte wie etwa Putzeimer und Putzmittel bilden. Optional kann also das Gehäuse als Einbauteil in Küchenunterschränke mit standardisierter Breite und Tiefe integrierbar sein. Die Höhe des Gehäuses kann dabei vorzugsweise höchstens der Küchensockelhöhe entsprechen. Alternativ zur Küche kann die Wasserfiltereinheit allerdings grundsätzlich an einem beliebigen Ort im Haushalt angeordnet und installiert werden, beispielsweise in einer Speisekammer oder in einem Haustechnikraum.

Optional kann die Wasserfiltereinheit einen oder mehr weitere Anschlussstutzen aufweisen wie etwa einen Elektroanschlussstutzen, einen Abwasserauslassanschlussstutzen und/oder einen Geschirrspülmaschinenanschlussstutzen. Vorzugsweise können sämtliche Anschlussstutzen an einer Vorderseite des Gehäuses angeordnet sein, um eine bequeme und schnelle Ankopplung für den Austausch zu erlauben.

Optional kann das Gehäuse in Form eines kofferartigen Austauschmoduls bodenseitig in einen Küchenunterschrank einschiebbar oder einlegbar sein. Damit kann die Wasserfiltereinheit als Gesamtsystem im Gegensatz zu lediglich einer lonenaustauschmittel-Kartusche im Rahmen eines Pfandsystems austauschbar sein. Einzelne Komponenten der Wasserfiltereinheit werden vorzugsweise nicht getauscht, sondern nur die Wasserfiltereinheit als Gesamteinheit. Ausgetauschte Wasserfiltereinheiten werden vorzugsweise nicht vor Ort, sondern im Rahmen eines Service werksseitig wiederaufbereitet, kalibriert und/oder gereinigt, um für einen erneuten Einsatz an gleicher oder anderer Stelle zur Verfügung zu stehen. Werksseitig aufbereitete Wasserfiltereinheiten können dann, sofern vorgesehen, frisches lonentauschermittel aufweisen.

Optional kann das erste Wasserfilter ein Umkehrosmosefilter sein. Dabei kann das erste Filter eine semipermeable Membran aufweisen, mit dem die Konzentration eines oder mehrerer Stoffe, wie etwa Salze, im Wasser verringert werden kann. Außerdem sind im Wasser befindliche Hormone und/oder Medikamente damit filterbar. Das Umkehrosmosefilter kann dabei einen Reinwasserauslass zum Druckbehälter hin aufweisen und einen Abwasserauslass, beispielsweise für die bei der Umkehrosmose entstehende Salzlake, der zum Abwasserauslassanschlussstutzen führt.

Optional kann die Wasserfiltereinheit ein weiteres Wasserfilter aufweisen, vorzugsweise ein Sedimentfilter, das dem ersten Wasserfilter vorgeschaltet ist. Das Sedimentfilter kann als mechanischer Feinfilter Partikel im Wasser vorfiltern und damit die Verschmutzungsrate des ersten Filters reduzieren. An dieser Stelle sei angemerkt, dass der Begriff "nachgeschaltet" bzw. "vorgeschaltet" im Sinne dieser Offenbarung als "stromabwärtigerseits" bzw. "stromaufwärtigerseits" zu verstehen ist und eine relative Positionierung im internen Wasserkreislauf der Wasserfiltereinheit mit fest vorgesehener Durchflussrichtung angibt. Ein Bauteil, das einem anderen Bauteil nachgeschaltet ist, kann, muss aber nicht im Wasserkreislauf direkt folgend hinter dem Bauteil angeordnet sein, sondern es können dazwischen weitere Bauteile angeordnet sein.

Optional kann die Wasserfiltereinheit ein weiteres Wasserfilter aufweisen, vorzugsweise ein für Chlorfilterung geeignetes Aktivkohle-Blockfilter, das dem ersten Wasserfilter vorgeschaltet ist. Insbesondere im Ausland weist das Wasser oft geschmacklich und/oder olfaktorisch wahrnehmbare Bestandteile von Chlor auf, die mit solch einem weiteren Wasserfilter reduziert werden können.

Optional kann die Wasserfiltereinheit ein weiteres Wasserfilter aufweisen, vorzugsweise ein Aktivkohlegranulatfilter, das dem Druckbehälter nachgeschaltet ist. Dieses Filter kann eine Kartusche mit Aktivkohlegranulat aufweisen. Alternativ oder zusätzlich kann das Wasserfilter ein Kunstharz aufweisendes lonentauschermittel aufweisen.

Optional kann die Wasserfiltereinheit einen Durchflussmengenzähler aufweisen, der zum Beispiel dem Reinwasserauslassanschlussstutzen vorgeschaltet ist. Der Durchflussmengenzähler kann dazu eingerichtet sein, über eine von außen sichtbare, vorzugsweise an der Vorderseite des Gehäuses angeordnete, Anzeige die bisherige Durchflussmenge seit dem letzten Austausch in einer absoluten Einheit und/oder relativen Einheit zu einer maximalen Durchflussmenge darzustellen. Alternativ oder zusätzlich kann basierend auf der Messung des Durchflussmengenzählers ein Signal zum Austausch ausgelöst werden, wenn eine festgelegte Durchflussmenge seit dem letzten Austausch überschritten wird.

Optional kann die Wasserfiltereinheit einen elektrischen Leitwertmesser aufweisen, der zum Beispiel dem Reinwasserauslassanschlussstutzen vorgeschaltet ist. Der gemessene elektrische Leitwert kann als Maßstab für die Filterleistung herangezogen werden und beispielsweise ein Filterversagen oder Filterdegeneration indizieren. Der Leitwertmesser kann dazu eingerichtet sein, über eine von außen sichtbare, vorzugsweise an der Vorderseite des Gehäuses angeordnete, Anzeige ein Filterversagen anzuzeigen (beispielsweise als rot leuchtende LED) oder/oder akustisch (beispielsweise als piependen Alarmton) mitzuteilen. Die Wasserfiltereinheit kann zusätzlich oder alternativ dazu selbsttätig abschalten, wenn der elektrische Leitwert im Reinwasser einen Grenzwert übersteigt, der ein Filterversagen indiziert.

Die Wasserfiltereinheit kann vorzugsweise eine drahtlose oder verkabelte Kommunikationsschnittstelle aufweisen, mittels derer eine vom Durchflussmengenzähler gemessene Durchflussmenge und/oder ein vom elektrischen Leitwertmesser gemessener elektrischer Leitwert und/oder ein Fehler- bzw. Austauschsignal auf einem externen mobilen oder externen stationären Kommunikationsgerät, wie etwa im Rahmen einer App auf einem Smartphone oder Tablet, für einen Anwender darstellbar ist. Alternativ oder zusätzlich kann solch eine Kommunikationsschnittstelle über das Internet mit einem Serviceanbieter in ständiger, regelmäßiger oder von einem Signal ausgelöster Kommunikation stehen. Der Serviceanbieter kann dadurch automatisch einen zukünftigen Austausch vorhersehen, einplanen und durchführen, ohne dass der Anwender dafür tätig werden muss. Zusätzlich oder alternativ können Leistungs- und/oder Fehlerdaten für eine Weiterentwicklung der Wasserfiltereinheit statistisch erfasst, in einer Datenbank gesammelt und analysiert werden. Vorzugsweise weist die Kommunikationsschnittstelle ein WLAN-Modul zur drahtlosen Kommunikationsverbindung mit einem hausinternen WLAN-Router auf. Die Wasserfiltereinheit kann zusätzlich oder alternativ dazu einen Mikrocontroller zur elektrischen Steuerung und/oder einen Speicher zur temporären oder permanenten Datenspeicherung aufweisen.

Alternativ zu einem durch ein Messsignal ausgelösten Austausch kann auch ein Timer-Modul, vorzugsweise als Teil eines in die Wasserfiltereinheit integrierten Mikrocontrollers, den Zeitablauf seit dem letzten Austausch anzeigen, an ein externes Gerät kommunizieren und/oder einen Austausch nach einem bestimmten Zeitablauf anfordern. Solch ein Timer-Modul kann auch als Software im Rahmen einer App auf einem Smartphone oder Tablet bzw. bei einem Serviceanbieter extern implementiert sein.

Optional kann die Wasserfiltereinheit einen Rückflussstopp aufweisen, der dem Wassereinlassanschlussstutzen nachgeschaltet ist. Damit kann Vorgaben der DIN EN 1717 und DIN 1988 Teil 4 entsprochen werden, um eine Beeinträchtigung oder Gefährdung des Trinkwassers durch Rückfluss auszuschließen. Der Rückflussstopp kann als Rückflussverhinderer, Rohrtrenner, Rohrunterbrecher und/oder Rohrbelüfter ausgestaltet sein.

Optional können die Pumpe dem Wassereinlassanschlussstutzen, das erste Filter der Pumpe, der Druckbehälter dem ersten Filter, und der Reinwasserauslassanschlussstutzen dem Druckbehälter nachgeschaltet sein. Mit diesem Wasserkreislauf kann im Druckbehälter gefiltertes Reinwasser unter Druck gespeichert werden und ein bis zu einer maximalen Durchflussrate im Wesentlichen konstanter Druck an Reinwasser am Reinwasserauslassanschlussstutzen bereitgestellt werden. Vorzugsweise wird dem Reinwasserauslassanschlussstutzen Trinkwasser in begrenzten Mengen und Durchflussraten entnommen.

Optional kann das Gehäuse verplombt verschließbar sein, um ein unbefugtes Öffnen zu vermeiden bzw. nachweisen zu können. Dadurch kann das innere des Gehäuses möglichst steril gehalten und eine unsachgemäße Handhabe von einzelnen Komponenten verhindert werden.

Die Offenbarung ist nachfolgend anhand von einem in der Zeichnung dargestellten Ausführungsbeispiel näher erläutert. Es zeigt:

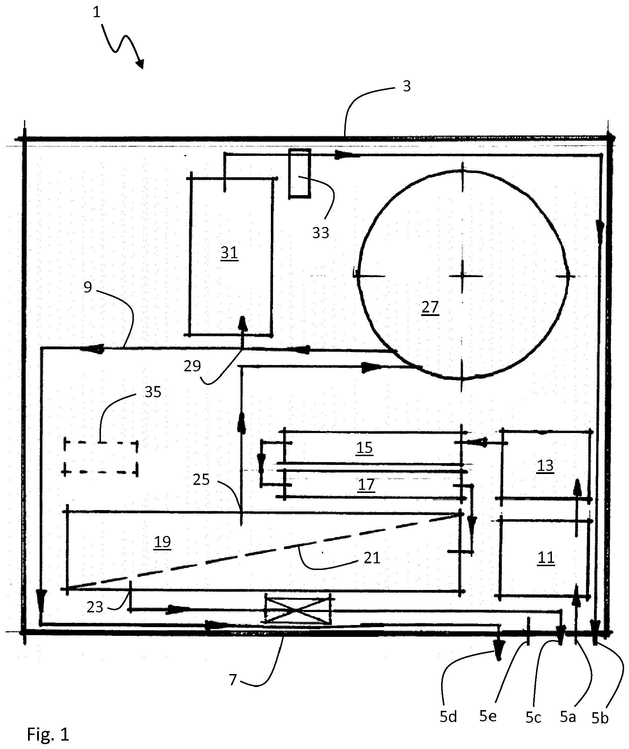

Fig. 1 eine schematische Draufsicht auf eine Wasserfiltereinheit gemäß der vorliegenden Offenbarung.

In Figur 1 ist eine Wasserfiltereinheit 1 mit einem im Wesentlichen quaderförmigen Gehäuse 3 gezeigt, in dem sämtliche Komponenten der Wasserfiltereinheit 1 fest installiert sind. Das Gehäuse 3 ist zu allen Seiten geschlossen und eine in der Papierebene der Figur 1 verlaufende Oberseite mit einem Gehäusedeckel (nicht gezeigt) verplombt verschlossen. Die Wasserfiltereinheit 1 weist fünf Anschlussstutzen 5a-e auf, die durch eine Gehäusewandung an der Vorderseite 7 des Gehäuses 3 führen. Über einen Wassereinlassanschlussstutzen 5a zum Anschluss an eine Hauswasserversorgung wird der Wasserfiltereinheit 1 zu filterndes Wasser zugeführt. Über einen Reinwasserauslassanschlussstutzen 5b wird der Wasserfiltereinheit 1 gefiltertes Reinwasser, vorzugsweise zum Trinken, entnommen.

Innerhalb des Gehäuses 3 durchläuft das Wasser einen Wasserkreislauf vom Wassereinlassanschlussstutzen 5a über ein Leitungssystem 9 zum Reinwasserauslassanschlussstutzen 5b. Im Wasserkreislauf ist dem Wassereinlassanschlussstutzen 5a zunächst ein Rücklaufstopp 11 direkt nachgeschaltet, um einen Rücklauf in das Wasserversorgungsnetz auszuschließen. Dem Rücklaufstopp 11 folgt im Wasserkreislauf eine Pumpe 13, mit der ein für den anschließenden Filterprozess benötigter Druck aufgebaut wird. Die Pumpe 13 kann als elektrisch angetriebene Umwälzkreiselpumpe ausgestaltet sein und über einen Elektroanschluss 5e mit elektrischem Strom versorgt werden.

In der hier gezeigten Ausführungsform sind der Pumpe 13 zunächst zwei optionale Filter 15, 17 nachgeschaltet. Zunächst folgt der Pumpe 13 ein Sedimentfilter 15, das als Grob- und/oder Feinfilter ausgestaltet sein kann, um grobe und feine Partikel auszufiltern. Ein anschließender Aktivkohle-Blockfilter 17 bindet etwaiges Chlor.

Der Hauptfilter oder erste Filter 19 der Wasserfiltereinheit 1 ist ein Umkehrosmosefilter, der dem Aktivkohle-Blockfilter 17 direkt nachgeschaltet ist. Der Umkehrosmosefilter 19 weist eine Membran 21 auf, die unter anderem Hormone und Medikamentenwirkstoffe filtert. Die ausgefilterten Stoffe werden in einer Abwasserlake über einen Abwasserauslass 23 zu einem Abwasserauslassanschlussstutzen 5c führt. Das durch die Membran 21 gefilterte Reinwasser wird über einen Reinwasserauslass 25 des Umkehrosmosefilters 19 zu einem Druckbehälter 27 im Wasserkreislauf weitergeführt. Ein unter Druck stehendes Luftreservoir im Druckbehälter 27 hält auch während einer Entnahme von Reinwasser am Reinwasserauslassanschlussstutzen 5b einen Mindestdruck aufrecht, damit ein Mindestentnahmedurchfluss gewährleistet ist. Bei Entnahme von Reinwasser am Reinwasserauslassanschlussstutzen 5b fließt nämlich Reinwasser aus dem Druckbehälter 27 über eine Verzweigung 29 durch einen optionalen Aktivkohlegranulatfilter 31 zur Bindung von Mineralien, sofern dies vom Anwender gewünscht ist. Dem Aktivkohlegranulatfilter 31 ist ein Durchflussmengenzähler 33 direkt nachgeschaltet, der dem Reinwasserauslassanschlussstutzen 5b direkt vorgeschaltet ist. Alternativ oder zusätzlich dazu kann der Durchflussmengenzähler 33 direkt hinter dem Reinwasserauslass 25 des Umkehrosmosefilters 19 angeordnet sein. Mit dem Durchflussmengenzähler 33 lässt sich die Durchflussmenge seit dem letzten Austausch der Wasserfiltereinheit 1 bestimmen und ggf. bei Überschreitung eines bestimmten Grenzwertes ein Austausch anfordern. Bei Unterschreitung eines bestimmten Grenzwertes kann ggf. ein Fehlersignal ausgelöst werden.

Die Verzweigung 29 weist hier einen optionalen Abzweig zu einem Geschirrspülmaschinenanschlussstutzen 5d auf, an dem eine Geschirrspülmaschine anschließbar ist und direkt aus dem Druckbehälter 27 mit Reinwasser versorgt werden kann.

Eine Steuereinheit 35 mit Mikrocontroller, Datenspeicher, Display und drahtloser Kommunikationsschnittstelle (WLAN, Bluetooth oder Ähnliches) kann mit den elektrischen Komponenten wie etwa der Pumpe 13, Zähler 8 und/oder elektrisch gesteuerten Ventilen signalverbunden sein und diese programmiert steuern. Entsprechende Daten oder Signale können auf dem Display dargestellt werden und/oder über die WLAN-Kommunikationsschnittstelle an ein externes Gerät (PC, Smartphone, Tablet) gesendet werden. Über die Kommunikationsschnittstelle können ggf. auch Steuerungssignale, Updates, Programme und/oder auswählbare Betriebsparameter von einem externen Gerät empfangen werden.

Die nummerierten Bezeichnungen der Bauteile oder Bewegungsrichtungen als "erste", "zweite", "dritte" usw. sind hierin rein willkürlich zur Unterscheidung der Bauteile oder Bewegungsrichtungen untereinander gewählt und können beliebig anders gewählt werden. Es ist damit kein Bedeutungsrang verbunden. Eine Bezeichnung eines Bauteils oder technischen Merkmals als "erstes" soll nicht dahingehend missverstanden werden, dass es ein zweites Bauteil oder technisches Merkmal dieser Art geben muss. Außerdem können etwaige Verfahrensschritte, soweit nicht explizit anders erläutert oder zwingend erforderlich, in beliebiger Reihenfolge und/oder zeitlich teilweise oder ganz überlappend durchgeführt werden.

Äquivalente Ausführungsformen der hierin beschriebenen Parameter, Bauteile oder Funktionen, die in Anbetracht dieser Beschreibung einer fachlich versierten Person als offensichtlich erscheinen, seien hierin so erfasst als wären sie explizit beschrieben. Entsprechend soll der Schutzbereich der Ansprüche solche äquivalente Ausführungsformen umfassen. Als optional, vorteilhaft, bevorzugt, erwünscht oder ähnlich bezeichnete "kann"-Merkmale sind als optional zu verstehen und nicht als schutzbereichsbeschränkend.

Die beschriebenen Ausführungsformen sind als illustrative Beispiele zu verstehen und stellen keine abschließende Liste von möglichen Ausführungsformen dar. Jedes Merkmal, das im Rahmen einer Ausführungsform offenbart wurde, kann allein oder in Kombination mit einem oder mehreren anderen Merkmalen verwendet werden, unabhängig davon, in welcher Ausführungsform die Merkmale jeweils beschrieben wurden. Während mindestens ein Ausführungsbeispiel hierin beschrieben und gezeigt ist, seien Abwandlungen und alternative Ausführungsformen, die einer fachmännisch versierten Person in Anbetracht dieser Beschreibung als offensichtlich erscheinen, vom Schutzbereich dieser Offenbarung mit erfasst. Im Übrigen soll hierin weder der Begriff "aufweisen" zusätzliche andere Merkmale oder Verfahrensschritte ausschließen noch soll "ein" oder "eine" eine Mehrzahl ausschließen.

## Patentansprüche

1. Austauschbare Wasserfiltereinheit (1) zum Anschluss an eine Haushaltswasserversorgung, mit:
- einem Gehäuse (3),
- einem Wassereinlassanschlussstutzen (5a),
- einem Reinwasserauslassanschlussstutzen (5b),
- einer Pumpe (13),
- mindestens einem ersten Wasserfilter (19),
- einem Druckbehälter (27), und
- einem Leitungssystem (9), das den Wassereinlassanschlussstutzen (5a), die Pumpe (13), das erste Wasserfilter (19), den Druckbehälter (27) und den Reinwasserauslassanschlussstutzen (5b) in einem Wasserkreislauf miteinander verbindet, wobei die Pumpe (13), das erste Wasserfilter (19), der Druckbehälter (27) und das Leitungssystem (9) in dem Gehäuse installiert sind, und
wobei der Wassereinlassanschlussstutzen (5a) und der Reinwasserauslassanschlussstutzen (5b) durch eine Wandung an einer gemeinsamen Seite (7) des Gehäuses (3) führen.

2. Wasserfiltereinheit (1) nach Anspruch 1, wobei das Gehäuse (3) polyedrisch, vorzugsweise im Wesentlichen quaderförmig, ausgestaltet ist.

3. Wasserfiltereinheit (1) nach Anspruch 1 oder 2, wobei das Gehäuse (3) als Einbauteil in Küchenunterschränke mit standardisierter Breite und Tiefe integrierbar ist.

4. Wasserfiltereinheit (1) nach einem der vorhergehenden Ansprüche, wobei die Höhe des Gehäuses (3) als Einbauteil für Küchenunterschränke höchstens der Küchensockelhöhe entspricht.

5. Wasserfiltereinheit (1) nach einem der vorhergehenden Ansprüche, ferner mit einem Elektroanschlussstutzen (5e), einem Abwasserauslassanschlussstutzen (5c) und/oder einem Geschirrspülmaschinenanschlussstutzen (5d).

6. Wasserfiltereinheit (1) nach einem der vorhergehenden Ansprüche, wobei sämtliche Anschlussstutzen (5a-e) an einer Vorderseite (7) des Gehäuses (3) angeordnet sind.

7. Wasserfiltereinheit (1) nach einem der vorhergehenden Ansprüche, wobei das Gehäuse (3) in Form eines kofferartigen Austauschmoduls bodenseitig in einen Küchenunterschrank einschiebbar ist.

8. Wasserfiltereinheit (1) nach einem der vorhergehenden Ansprüche, wobei das erste Wasserfilter (19) ein Umkehrosmosefilter ist.

9. Wasserfiltereinheit (1) nach einem der vorhergehenden Ansprüche, ferner mit einem weiteren Wasserfilter (15), vorzugsweise einem Sedimentfilter, das dem ersten Wasserfilter (19) vorgeschaltet ist.

10. Wasserfiltereinheit (1) nach einem der vorhergehenden Ansprüche, ferner mit einem weiteren Wasserfilter (17), vorzugsweise einem für Chlorfilterung geeignetem Aktivkohle-Blockfilter, das dem ersten Wasserfilter (19) vorgeschaltet ist.

11. Wasserfiltereinheit (1) nach einem der vorhergehenden Ansprüche, ferner mit einem weiteren Wasserfilter (31), vorzugsweise einem Aktivkohlegranulatfilter, das dem Druckbehälter (27) nachgeschaltet ist.

12. Wasserfiltereinheit (1) nach einem der vorhergehenden Ansprüche, ferner mit einem Durchflussmengenzähler (33) und/oder einem elektrischen Leitwertmesser, der vorzugsweise dem Reinwasserauslassanschlussstutzen (5b) vorgeschaltet ist.

13. Wasserfiltereinheit (1) nach einem der vorhergehenden Ansprüche, ferner mit einem Rückflussstopp (11), der dem Wassereinlassanschlussstutzen (5a) nachgeschaltet ist.

14. Wasserfiltereinheit (1) nach einem der vorhergehenden Ansprüche, wobei die Pumpe (13) dem Wassereinlassanschlussstutzen (5a), das erste Filter (19) der Pumpe (13), der Druckbehälter (27) dem ersten Filter (19), und der Reinwasserauslassanschlussstutzen (5b) dem Druckbehälter (27) nachgeschaltet sind.

15. Wasserfiltereinheit (1) nach einem der vorhergehenden Ansprüche, wobei das Gehäuse (3) verplombt verschließbar ist.

16. Wasserfiltereinheit (1) nach einem der vorhergehenden Ansprüche, ferner mit einer drahtlosen und/oder verkabelten Kommunikationsschnittstelle zum Senden und/oder Empfangen von Messdaten, Signalen, Befehlen, Programmen, Updates, und/oder Betriebsparametern an ein externes mobiles oder stationäres Gerät bzw. von einem externen mobilen oder stationären Gerät.
